# DEMANDE DE BREVET EUROPEEN

(11) **EP 4 415 187 A1**
(43) Date de publication de la demande: **14.08.2024**
(21) Numéro de dépôt: 24155419.5
(22) Date de dépôt: 02.02.2024
(51) Int. Cl.: H01R 39/64, B63B 21/50, H01R 35/00

(54) **DISPOSITIF JOINT TOURNANT ÉLECTRIQUE HAUTE TENSION CONFIGURÉ POUR ÉQUIPER UNE INSTALLATION D'EXPLOITATION D'ÉNERGIE**

(30) Priorité: 08.02.2023 FR 2301174
(71) Demandeur: ETI Group, 13420 Gémenos (FR)
(72) Inventeur: CADORET, Yves, 72000 LE MANS (FR); MENARDO, Philippe, 06310 Beaulieu-sur-Mer (FR)
(74) Mandataire: Santarelli

(57) **Abrégé**

L'invention concerne un dispositif joint tournant électrique configuré pour équiper une installation d'exploitation d'énergie, comportant une première partie présentant un premier connecteur électrique (112) et une première piste électrique (113) reliée électriquement au premier connecteur, une deuxième partie présentant un deuxième connecteur électrique (122) et une deuxième piste électrique (123) reliée électriquement au deuxième connecteur, et un mécanisme d'interconnexion électrique (50) configuré pour interconnecter électriquement les première et deuxième pistes électriques, avec les première et deuxième parties qui sont mobiles l'une par rapport à l'autre et qui définissent entre elles une chambre interne fermée dans laquelle sont logés les première et deuxième pistes électriques et le mécanisme d'interconnexion, ce dernier comportant des organes de contact électrique (30) qui sont logés notamment précontraints entre les première et deuxième pistes électriques et qui sont configurés pour former des contacts roulant et déformables entre les première et deuxième pistes électriques.

## Description

### DOMAINE TECHNIQUE DE L'INVENTION

L'invention concerne les dispositifs joint tournant électrique configurés pour équiper des installations d'exploitation d'énergie, du type fluidique et/ou électrique, notamment sur des plateformes du type offshore ou sous-marine.

En particulier, l'invention vise un dispositif joint tournant électrique haute tension.

L'invention vise également une installation d'exploitation d'énergie, notamment fluidique et/ou électrique, et par exemple sur une plateforme du type offshore ou sous-marine, comportant au moins un tel dispositif joint tournant électrique.

### ÉTAT DE LA TECHNIQUE

Les dispositifs joint tournant configurés pour équiper des installations d'exploitation d'énergie dans le domaine maritime peuvent être installés sur des navires, des structures permettant la production et/ou la distribution d'énergie fluidique et/ou électrique, et/ou le raccordement fluidique et/ou électrique.

Un exemple d'une telle installation vise la production pétrolière, et permet notamment l'exploitation de champs d'hydrocarbures en mer.

Des unités flottantes de production, de stockage, de traitement, de déchargement peuvent être formées par un navire qui est mobile, du fait de son environnement, autour d'une tourelle d'amarrage qui est géostationnaire. Le navire peut être assujetti temporairement à la tourelle.

Les installations peuvent comporter des conduits et câbles qui forment un réseau subaquatique et qui permettent une communication énergétique, fluidique et/ou électrique pour le transfert énergétique entre le fond de la mer et le navire.

De tels dispositifs joint tournant électrique peuvent faire partie d'un ensemble joint tournant comportant en outre un empilement de dispositifs joint tournant d'étanchéité (« *swivel stack device* » en terminologie anglo-saxonne), le dispositif joint tournant électrique pouvant être interposé entre les dispositifs joint tournant d'étanchéité.

De tels dispositifs joint tournant électrique, aussi appelés collecteurs électriques tournants ou bien, en terminologie anglo-saxonne, « *electrical swivel devices* » sont des dispositifs électromécaniques configurés pour transférer une énergie électrique par exemple entre l'unité flottante, notamment le navire, qui est mobile, et la tourelle d'amarrage qui est fixe.

Pour assurer l'étanchéité et le transfert d'énergie électrique entre l'unité flottante et la tourelle, les dispositifs joint tournant électrique sont pourvus d'une première partie, dite fixe, assujettie à la tourelle et d'une deuxième partie, dite mobile, assujettie au navire. La deuxième partie des dispositifs joint tournant électrique est donc mobile par rapport à la première partie des dispositifs joint tournant électrique.

Les dispositifs joint tournant électrique présentent une chambre interne délimitée par les première et deuxième parties. Cette chambre interne est globalement fermée et étanche aux fluides.

Par exemple, les dispositifs joint tournant électrique peuvent être pourvus de plusieurs organes d'étanchéité dynamique, dits joints dynamiques, disposés dans des espaces ménagés entre la première partie fixe et la deuxième partie mobile des dispositifs joint tournant électrique.

De tels organes d'étanchéité dynamique peuvent comporter par exemple des lèvres ayant pour fonction d'assurer l'étanchéité face au fluide.

On connaît notamment des brevets EP 3 379 660 et EP 3 736 919 des dispositifs joint tournant électrique qui fonctionnent avec des pistes conductrices circulaires qui sont montées sur l'une des première partie fixe et deuxième partie mobile, dans la chambre interne, et qui coopèrent avec des blocs frotteur qui sont montés sur l'autre des deuxième partie mobile et première partie fixe, dans la chambre interne, afin d'établir des liaisons électriques, notamment selon plusieurs phases électriques.

Dans une telle application dite « offshore », les dispositifs joint tournant électrique dits haute tension peuvent par exemple être configurés pour faire transiter des tensions de l'ordre de ou supérieures à 1 500 V en courant continu ou 1 000 V en courant alternatif, permettant le transfert d'une puissance électrique importante entre une structure fixe reliée au sol marin (équipement sous-marin) et une partie mobile telle qu'un navire flottant de production, de stockage et de déchargement (ou FPSO, sigle de « *Floating Production, Storage and Offloading vessel* » en terminologie anglo-saxonne).

Les dispositifs joint tournant électrique qui sont utilisés dans de telles applications doivent répondre à des exigences de qualité prédéterminées pour offrir un certain niveau de sécurité, notamment dans une atmosphère potentiellement explosive.

A ces fins, la chambre interne des dispositifs joint tournant électrique peut contenir notamment un fluide diélectrique.

Dans le document EP 3 379 660, il est prévu que le fluide diélectrique soit un gaz d'isolation diélectrique ayant une rigidité diélectrique supérieure à celle de l'air environnant le dispositif joint tournant électrique.

Dans le document EP 3 736 919, il est prévu un système de génération et d'injection d'un brouillard de fluide diélectrique dans la chambre interne, et un système de récupération et de réinjection du milieu diélectrique formé du fluide diélectrique et du brouillard de fluide diélectrique dans la chambre interne.

Ces solutions permettent notamment d'isoler les pistes conductrices afin par exemple d'éviter la formation d'arcs électriques avec des pièces conductrices voisines (en général des pièces métalliques), éventuellement de réduire la distance entre les pistes conductrices, voire même de nettoyer la chambre interne.

### EXPOSÉ DE L'INVENTION

L'invention vise à fournir un dispositif joint tournant électrique, notamment haute tension, configuré pour équiper une installation d'exploitation d'énergie, notamment fluidique et/ou électrique, présentant des performances encore améliorées par rapport aux dispositifs de l'art antérieur susmentionné, tout en étant simple, commode et économique.

L'invention a ainsi pour objet, selon un premier aspect, un dispositif joint tournant électrique, notamment haute tension, configuré pour équiper une installation d'exploitation d'énergie, notamment fluidique et/ou électrique, par exemple sur une plateforme offshore, comportant une première partie présentant au moins un premier connecteur électrique et au moins une première piste électrique reliée électriquement au premier connecteur électrique, une deuxième partie présentant au moins un deuxième connecteur électrique et au moins une deuxième piste électrique reliée électriquement au deuxième connecteur électrique, et un mécanisme d'interconnexion électrique configuré pour interconnecter électriquement la première piste électrique et la deuxième piste électrique, avec la première partie et la deuxième partie qui sont mobiles l'une par rapport à l'autre et qui définissent entre elles une chambre interne fermée dans laquelle sont logés la première piste électrique, la deuxième piste électrique et le mécanisme d'interconnexion électrique ; caractérisé en ce que le mécanisme d'interconnexion électrique comporte une pluralité d'organes de contact électrique qui sont logés, notamment précontraints, entre la première piste électrique et la deuxième piste électrique et qui sont configurés pour former des contacts roulant et déformables entre la première piste électrique et la deuxième piste électrique.

Dans le dispositif joint tournant électrique selon l'invention, l'interconnexion électrique entre la première piste électrique et la deuxième piste électrique se fait grâce aux organes de contact électrique roulant et déformables.

Ainsi, dans le dispositif joint tournant électrique, il est possible de s'affranchir des blocs frotteurs des solutions de l'art antérieur.

Le fait que les organes de contact électrique sont déformables permet le montage précontraint, c'est-à-dire en déformation permanente, de ces organes de contact électrique, ce qui assure un contact mécanique permanent entre la première piste électrique, la deuxième piste électrique et les organes de contact électrique.

En outre, le fait que les organes de contact électrique sont roulant permet d'assurer le contact mécanique permanent et ce malgré la rotation des première et deuxième parties l'une par rapport à l'autre et donc des première et deuxième pistes électriques.

En d'autres termes, la continuité électrique entre la première piste électrique et la deuxième piste électrique est également assurée au travers des organes de contact électrique, tout en évitant leur usure par frottement et donc en favorisant la longévité du mécanisme d'interconnexion électrique.

Il est à noter que c'est la combinaison de la précontrainte, ou autrement dit de la déformation permanente, et du mouvement de rotation des première et deuxième pistes électriques l'une par rapport à l'autre qui génère la déformation des organes de contact électrique, formant ainsi une surface de contact plus importante entre les organes de contact électrique et ces première et deuxième pistes électriques.

Des caractéristiques préférées particulièrement simples, commodes et économiques du dispositif selon l'invention sont présentées ci-après.

Les organes de contact électrique présentent chacun une face interne et un logement interne délimité par la face interne et le mécanisme d'interconnexion électrique comporte une pluralité d'organes élastiques conducteurs qui sont disposés dans un logement interne respectif et plaqués contre une face interne respective.

De tels organes élastiques conducteurs sont configurés pour s'adapter à la face interne respective des organes de contact électrique malgré la déformation de ces derniers due à la précontrainte et au mouvement des première et deuxième pistes électriques.

L'ajout de tels organes élastiques conducteurs plaqués contre la face interne respective des organes de contact électrique permet d'épaissir, en section, ces organes de contact électrique sans réduire leur déformabilité.

En d'autres termes, ces organes élastiques conducteurs permettent d'augmenter la section de passage de l'énergie électrique sans rendre plus rigide les organes de contact électrique.

Le dispositif joint tournant électrique offre ainsi la possibilité de transférer de l'énergie électrique non seulement à haute tension mais aussi à haute intensité de courant.

Les organes élastiques conducteurs peuvent être formés par des ressorts en spirale.

Les organes élastiques conducteurs peuvent présenter une face de contact venant s'appliquer sur la face interne respective des organes de contact électrique.

Les organes de contact électrique sont formés par des portions tubulaires cylindriques ou tronconiques.

Les organes de contact électrique sont disposés à distance les uns des autres entre et le long de la première piste électrique et la deuxième piste électrique.

Le mécanisme d'interconnexion électrique comporte un organe support sur lequel sont disposés, mobiles en rotation, les organes de contact électrique.

L'organe support présente la forme d'une chaîne pourvue de maillons comportant chacun au moins un organe de contact électrique.

L'organe support comporte des éléments inférieurs et des éléments supérieurs disposés en regard et assujettis mécaniquement, chacun des éléments inférieurs chevauchant au moins un autre des éléments inférieurs et chacun des éléments supérieurs chevauchant au moins un autre des éléments supérieurs, formant ainsi les maillons.

Chaque maillon présente, entre les éléments inférieurs et les éléments supérieurs qui se chevauchent, au moins un espace de réception d'un organe de contact électrique.

Chaque maillon présente au moins un plot d'espacement disposé entre deux espaces de réception successifs.

Les maillons et les organes de contact électrique sont agencés de sorte que les organes de contact électrique saillent latéralement des maillons pour assurer le contact avec la première piste électrique et la deuxième piste électrique.

La première piste électrique et la deuxième piste électrique présentent, en section, une forme en L et sont disposées tête bêche de sorte à former un espace interne dans lequel sont disposés les organes de contact électrique.

L'au moins un premier connecteur électrique, respectivement l'au moins un deuxième connecteur électrique, peuvent présenter une forme de rateau incluant un corps principal duquel saillent, d'un premier côté tourné vers la première piste électrique, respectivement vers la deuxième piste électrique, une pluralité de broches de connexion secondaires raccordées à la première piste électrique, respectivement à la deuxième piste électrique, et duquel saillent, d'un second côté opposé au premier côté, une broche de connexion principale.

L'invention a aussi pour objet, selon un deuxième aspect, une installation d'exploitation d'énergie, notamment fluidique et/ou électrique, comportant au moins un dispositif joint tournant électrique tel que décrit ci-dessus, avec la première partie du dispositif joint tournant qui est assujettie à une unité fixe de l'installation et la deuxième partie du dispositif joint tournant qui est assujettie à une unité mobile de l'installation.

L'unité fixe peut être par exemple une tourelle d'amarrage et l'unité flottante peut par exemple être un navire, une éolienne, ou un concentrateur du type hub en terminologie anglo-saxonne.

### BRÈVE DESCRIPTION DES FIGURES

L'invention, selon un exemple de réalisation, sera bien comprise et ses avantages apparaitront mieux à la lecture de la description détaillée qui suit, donnée à titre indicatif et nullement limitatif, en référence aux dessins annexés.

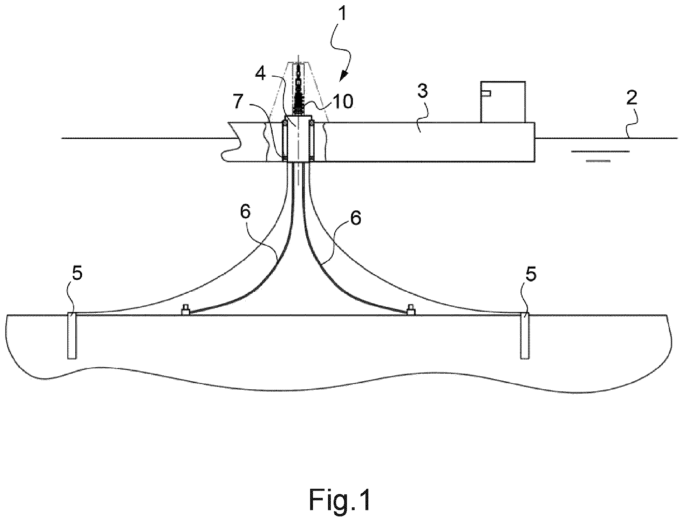

La figure 1 représente schématiquement et partiellement une installation d'exploitation d'énergie sur une plateforme offshore, pourvue d'un navire, d'une tourelle d'amarrage, d'un réseau de canalisations et de câbles subaquatiques permettant une communication pour le transfert de fluides et/ou d'énergie entre la tourelle et le navire, et d'un ensemble joint tournant comportant un empilement d'au moins un dispositif joint tournant d'étanchéité prévu pour assurer l'étanchéité entre le navire et la tourelle et l'intégrité du transfert de fluides, et d'au moins un dispositif joint tournant électrique prévu pour assurer l'acheminement d'énergie électrique entre le navire et la tourelle.
La figure 2 représente schématiquement en perspective, selon un angle de vue, le dispositif joint tournant électrique de l'installation illustrée sur la figure 1.
La figure 3 est une vue similaire à celle de la figure 2, prise selon un angle de vue différent.
La figure 4 représente schématiquement et partiellement l'intérieur du dispositif joint tournant électrique visible sur les figures 2 et 3.
La figure 5 est une vue de détail de la figure 4, montrant en particulier un mécanisme d'interconnexion électrique configuré pour interconnecter électriquement une première piste électrique et une deuxième piste électrique du dispositif joint tournant électrique.
La figure 6 est une vue en perspective isolée d'une portion du mécanisme d'interconnexion électrique.
La figure 7 représente schématiquement et partiellement en perspective une variante de réalisation du dispositif joint tournant électrique.

### DESCRIPTION DÉTAILLÉE DE L'INVENTION

La figure 1 illustre une installation d'exploitation d'énergie 1, en particulier ici de fluides, sur une plateforme offshore, permettant par exemple l'exploitation de champs d'hydrocarbures en mer 2.

En variante, il pourrait par exemple s'agir d'une installation exploitation d'énergie électrique permettant l'exploitation de champs éoliens.

L'installation 1, aussi appelée unité flottante de production, de stockage et de déchargement, peut être pourvue d'une unité mobile telle qu'un navire 3 qui est mobile du fait de son environnement formé par la mer 2, et d'une unité fixe telle qu'une tourelle d'amarrage 4 qui est géostationnaire et autour de laquelle le navire 3 est mobile.

La tourelle d'amarrage 4 peut par exemple être assujettie mécaniquement au fond de la mer 2 via des ancres sous-marines 5.

Le navire 3 peut être mobile vis-à-vis de la tourelle d'amarrage 4 par le biais d'un mécanisme à roulements 7.

L'installation 1 peut être pourvue de conduits 6 qui forment un réseau de canalisations subaquatiques permettant une communication fluidique pour le transfert du fluide entre la tourelle d'amarrage 4 et le navire 3.

L'installation 1 comporte un ensemble joint tournant assurant l'étanchéité entre le navire 3 et la tourelle d'amarrage 4 et donc l'intégrité du transfert de fluide, via un empilement notamment de dispositifs joint tournant d'étanchéité.

Cet ensemble joint tournant assure également le transfert d'énergie électrique entre le navire 3 et la tourelle d'amarrage 4, via au moins un dispositif joint tournant électrique 10 installé dans l'empilement de dispositifs joint tournant d'étanchéité.

L'au moins un dispositif joint tournant électrique 10 peut être interposé entre des dispositifs joint tournant d'étanchéité, ou superposé à ces derniers, ou même agencé de manière concentrique avec au moins un de ces dispositifs joint tournant d'étanchéité et/ou avec au moins un autre dispositif joint tournant électrique.

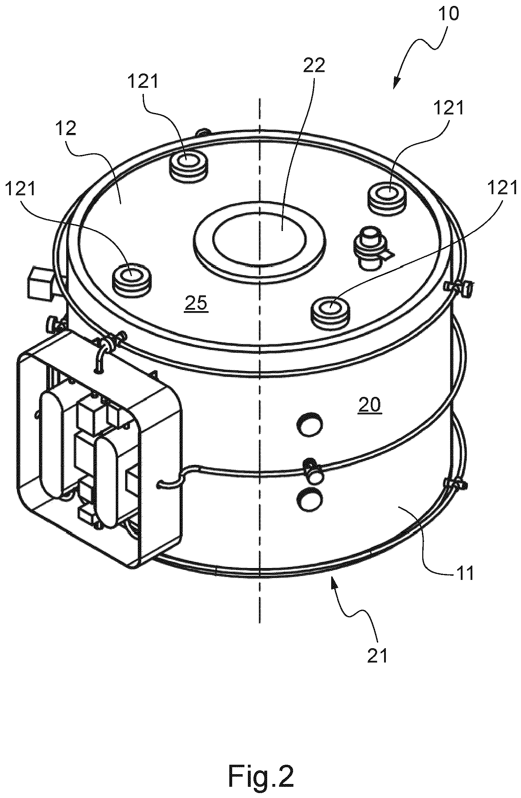

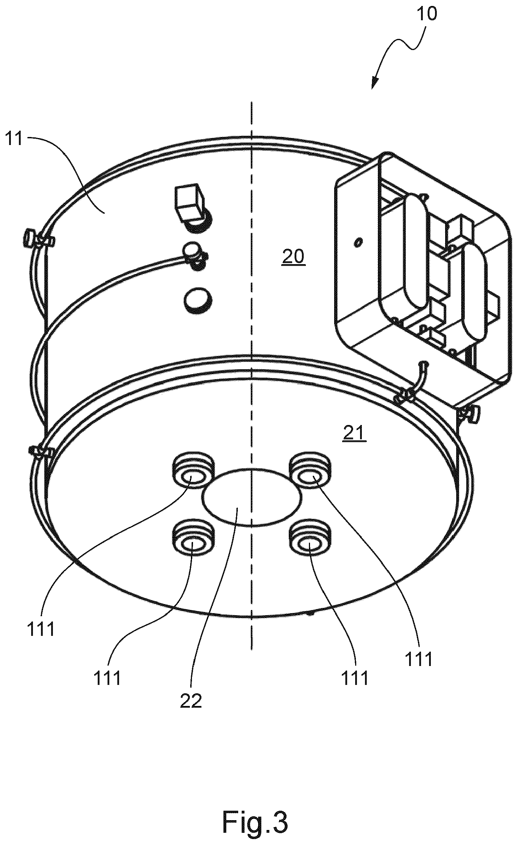

Les figures 2 et 3 représentent un tel dispositif joint tournant électrique 10, lequel est globalement cylindrique et comporte une première partie 11, ici fixe, qui est configurée pour être assujettie à la tourelle d'amarrage 4, ainsi qu'une deuxième partie 12, ici mobile, qui est configurée pour être assujettie au navire 3.

Dans l'exemple illustré, la deuxième partie 12 peut être mobile en rotation par rapport à la première partie 11, par l'intermédiaire d'un organe à roulements ou palier (non représenté) au moins partiellement interposé entre les première et deuxième parties 11 et 12.

Les première et deuxième parties 11 et 12 sont ici agencées de manière sensiblement concentrique.

La première partie 11 peut être pourvue d'une paroi externe cylindrique 20, d'une paroi de dessous 21 raccordée à une extrémité inférieure de la paroi externe cylindrique 20, et d'un fût central 22 s'étendant depuis la paroi de dessous 21, à l'intérieur de la paroi externe cylindrique 20.

Le dispositif joint tournant électrique 10 comporte des éléments de connexion électrique qui sont montés en saillie de la paroi de dessous 21 et s'étendent autour du fût central 22.

La deuxième partie 12 peut être pourvue d'une paroi de dessus 25 ayant une ouverture centrale et de laquelle saillent, de part et d'autre de la paroi de dessus 25, notamment d'autres éléments de connexion électrique.

Dans l'exemple illustré, la première partie 11 et la deuxième partie 12 sont assemblées de sorte que la paroi de dessus 25 se trouve à l'intérieur de la paroi externe cylindrique 20 de la première partie 11, sensiblement à fleur d'une extrémité supérieure de la paroi externe cylindrique 20 opposée à son extrémité inférieure, et avec l'ouverture centrale de la deuxième partie 11 qui se trouve autour du fût central 22 de la première partie 11.

Le dispositif joint tournant électrique 10 est pourvu d'organes d'étanchéité (non représentés) qui sont logés entre les première et deuxième parties 11 et 12 et qui assurent une étanchéité dynamique entre celles-ci.

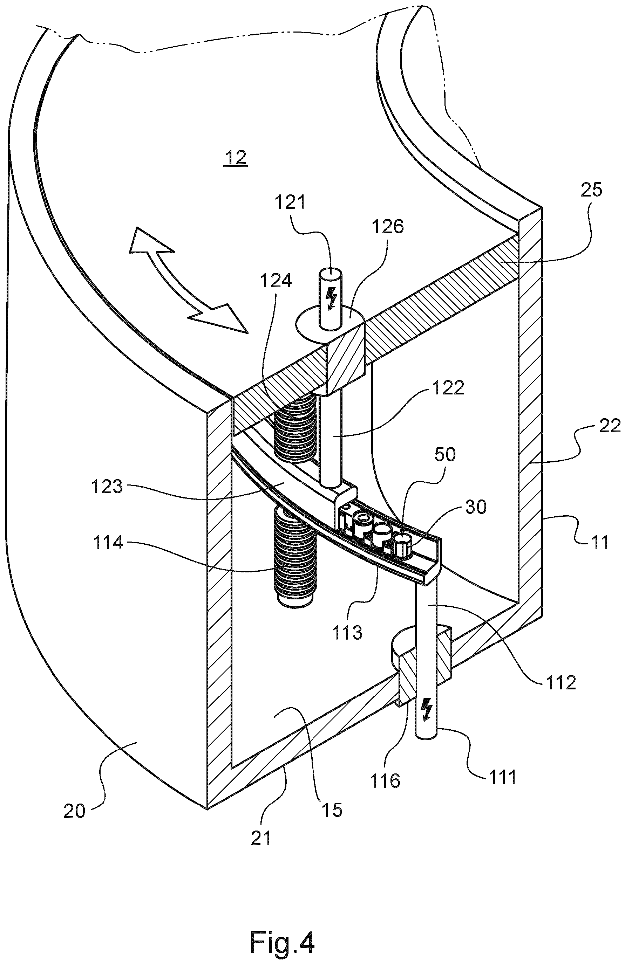

En référence toujours aux figures 2 et 3, et aussi à la figure 4, le dispositif joint tournant électrique 10 est pourvu d'une chambre interne délimitée par l'assemblage des première partie 11 et deuxième partie 12.

Cette chambre interne 15 est ici fermée et étanche.

Dans un exemple de réalisation, la chambre interne 15 peut comporter un milieu diélectrique, qui peut être sous pression.

Un tel milieu diélectrique peut comporter un mélange de liquide diélectrique et/ou de gaz diélectrique, avec optionnellement un brouillard de fluide diélectrique.

La chambre interne 15 peut comporter en outre un gaz inerte.

Dans une variante de réalisation, la chambre interne est dépourvue d'un tel milieu diélectrique.

Ainsi qu'indiqué plus haut, des éléments de connexion électrique sont disposés sur les première partie 11 et deuxième partie 12.

Ces éléments de connexion électriques sont formés par plusieurs premiers connecteurs électriques 111 qui traversent des premiers supports de connecteur 116 logés dans la paroi de dessous 21 de la première partie 11, et qui débouchent de part et d'autre du support de connecteur 116 à l'extérieur et à l'intérieur de la chambre interne 15.

Ces éléments de connexion électriques sont aussi formés par plusieurs deuxièmes connecteurs électriques 121 qui traversent des deuxièmes supports de connecteur 126 logés dans la paroi de dessus 25 de la deuxième partie 12, et qui débouchent de part et d'autre du support de connecteur 126 à l'extérieur et à l'intérieur de la chambre interne 15.

Les éléments de connexion électrique sont en outre formés par au moins une paire de pistes électriquement conductrices, dont une première piste électrique 113 et une deuxième piste électrique 123 qui sont logées dans la chambre interne 15.

Les première et deuxième pistes électriques 113 et 123 sont ici assujetties mécaniquement respectivement à la première partie 11 et à la deuxième partie 12 par l'intermédiaire d'organes d'isolation électrique 114, 124, par exemple en forme d'entretoise et qui d'une part, portent les première et deuxième pistes électriques 113 et 123 et d'autre part, sont elles-mêmes assujetties mécaniquement respectivement à la première partie 11 et à la deuxième partie 12.

Sur la figure 4, une seule paire de pistes électriques est illustrée mais le dispositif joint tournant électrique peut comporter une pluralité de paires de pistes, agencées de manière juxtaposée et/ou superposée et/ou concentrique.

Dans l'exemple illustré, la première piste électrique 113 est reliée électriquement à un premier connecteur 111 via une portion interne 112 de ce dernier, tandis que la deuxième piste électriques 123 est reliée électriquement à un deuxième connecteur 121 via une portion interne 122 de ce dernier.

La première piste électrique 113 et la deuxième piste électriques 123 s'étendent chacune dans la chambre interne 15 selon une révolution.

La première piste électrique 113 et la deuxième piste électrique 123 présentent, en section, une forme en L et sont disposées tête bêche dans la chambre interne 15.

Ainsi, un espace interne est formé entre la première piste électrique 113 et la deuxième piste électrique 123, cet espace interne étant globalement fermé par des branches respectives des L (voir ci-après plus en détail).

Le dispositif joint tournant électrique 10 comporte en outre un mécanisme d'interconnexion électrique 50 logé dans la chambre interne 15 et configuré pour interconnecter électriquement la première piste électrique 113 et la deuxième piste électrique 123.

En particulier, le mécanisme d'interconnexion électrique 50 comporte une pluralité d'organes de contact électrique 30 qui sont configurés pour être logés précontraints entre la première piste électrique 113 et la deuxième piste électrique 123.

En d'autres termes, les organes de contact électrique 30 sont logés dans l'espace interne ménagé entre la première piste électrique 113 et la deuxième piste électrique 123.

Ces organes de contact électrique 30 sont configurés pour former des contacts roulant et déformables entre la première piste électrique 113 et la deuxième piste électrique 123.

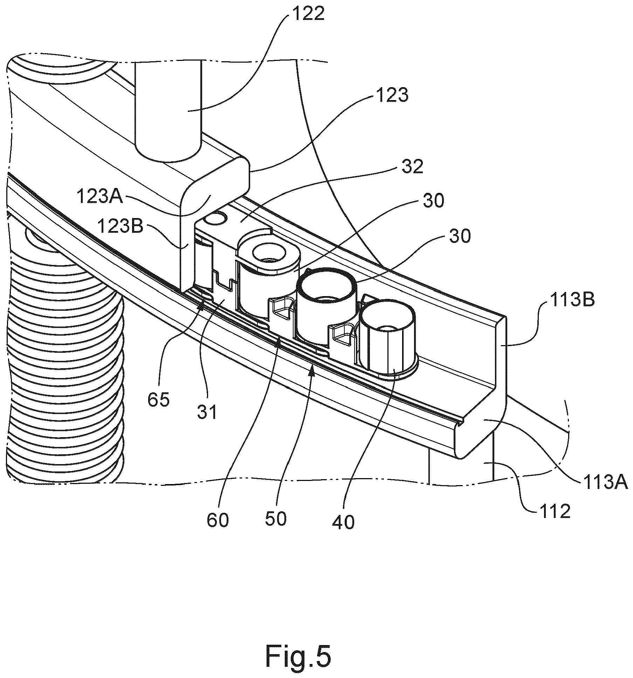

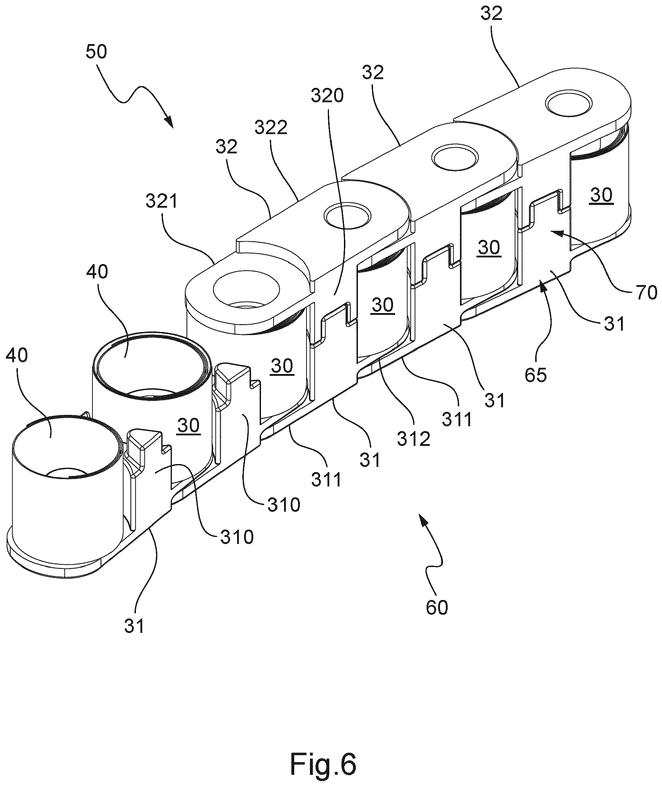

En référence maintenant aux figures 5 et 6, la première piste électrique 113 est fixe et présente une première branche 113A reliée à la portion interne 112 du premier connecteur électrique et une deuxième branche 113B s'étendant sensiblement perpendiculairement à la première branche 113A, en direction de la deuxième piste électrique 123.

La deuxième piste électrique 123 est ici mobile par rapport à la première piste électrique 113 et elle présente une première branche 123A reliée à la portion interne 122 du deuxième connecteur électrique 121 et une deuxième branche 123B s'étendant sensiblement perpendiculairement à la première paroi 123A, en direction de la première piste électrique 113.

La première piste électrique et la deuxième piste électrique peuvent être pourvues, au niveau d'extrémités libres des premières et deuxième branches qui se trouvent respectivement en regard, des éléments d'engagement complémentaires, par exemple une lèvre et une rainure dans laquelle est reçue la lèvre, pour assurer le positionnement de la première piste électrique et de la deuxième piste électrique l'une par rapport à l'autre et ainsi pour avoir un espace interne relativement constant le long des première et deuxième pistes électriques.

Les organes de contact électrique 30, et plus généralement le mécanisme d'interconnexion électrique 50, sont logés dans cet espace interne de sorte à être précontraints entre les deuxièmes branches 113B et 123B des première et deuxième pistes électriques 113 et 123.

Les organes de contact électrique 30 sont ici formés par des portions tubulaires cylindriques.

Les organes de contact électrique 30 présentent chacun une face externe par laquelle ils sont en contact avec les première et deuxième pistes électriques 113 et 123, une face interne opposée à la face externe et un logement interne délimité par la face interne.

Le mécanisme d'interconnexion électrique 50 comporte une pluralité d'organes élastiques conducteurs 40 qui sont disposés dans le logement interne respectif et plaqués contre la face interne respective des organes de contact électrique 30 respectifs.

Les organes élastiques conducteurs 40 sont ici formés par des ressorts en spirale, et en particulier du type clinquant, ayant une face de contact par exemple plane qui vient s'appliquer sur la face interne respective des organes de contact électrique 30.

Les organes de contact électrique 30 sont configurés de sorte qu'ils se déforment sous l'action combinée de la précontrainte et du mouvement relatif des première et deuxième pistes électriques 113 et 123.

Les organes de contact électrique 30 présentent une section circulaire en l'absence de contrainte, cette section pouvant devenir sensiblement elliptique une fois les organes de contact électrique 30 déformés entre les première et deuxième pistes électriques 113 et 123.

Une telle déformation des organes de contact électrique 30 entraîne une déformation aussi des organes élastiques conducteurs 40, ce qui se traduit par un déroulement de spires des ressorts, les spires se déplaçant les unes par rapport aux autres, afin de rester appliquées sur la face interne des organes de contact électrique 30.

En d'autres termes, les ressorts en spirale se déroulent pour rester en contact intime avec l'intérieur des portions tubulaires cylindriques.

Les organes de contact électrique 30 sont ici disposés à distance les uns des autres entre et le long de la première piste électrique 113 et la deuxième piste électrique 123.

Le mécanisme d'interconnexion électrique 50 comporte un organe support 60 sur lequel sont disposés, mobiles en rotation, les organes de contact électrique 30.

En particulier, dans l'exemple illustré, l'organe support 60 présente la forme d'une chaîne pourvue de maillons 65 comportant chacun au moins un organe de contact électrique 30.

L'organe support 60, mieux visible sur la figure 6, comporte des éléments inférieurs 31 et des éléments supérieurs 32 disposés en regard et assujettis mécaniquement.

Chacun des éléments inférieurs 31 chevauche au moins un autre des éléments inférieurs 31 et chacun des éléments supérieurs 32 chevauche au moins un autre des éléments supérieurs 32, formant ainsi les maillons 65.

Chaque maillon 65 présente, entre les éléments inférieurs 31 et les éléments supérieurs 32 qui se chevauchent, au moins un espace de réception d'un organe de contact électrique 30.

Chaque maillon 65 présente au moins un plot d'espacement 70 disposé entre deux espaces de réception successifs.

Les éléments inférieurs 31 et les éléments supérieurs 32 sont assemblés au niveau des plots d'espacement 70, par la coopération d'une pièce mâle 310 et d'une pièce femelle 320 qu'ils comportent respectivement.

En particulier, dans l'exemple illustré, les éléments inférieurs 31 et les éléments supérieurs 32 sont pourvus chacun respectivement d'une première platine d'extrémité respectivement 311 et 321, d'une deuxième platine d'extrémité respectivement 312 et 322, et d'une pièce mâle ou femelle respectivement 310 et 320, disposée entre la première platine d'extrémité et la deuxième platine d'extrémité.

Les première et deuxième platines d'extrémité 311, 321, 312 et 322 sont prévues pour supporter et maintenir les organes de contact électrique 30 dans les espaces internes ménagés dans les maillons 65.

Le chevauchement des éléments inférieurs 31 et des éléments supérieurs 32 se fait au niveau des première et deuxième platines d'extrémité 311, 321, 312 et 322, avec notamment la première platine d'extrémité d'un élément inférieur qui chevauche la deuxième platine d'extrémité d'un autre élément inférieur adjacent, et avec la première platine d'extrémité de l'élément supérieur en regard du même élément inférieur qui chevauche la deuxième platine d'extrémité d'un autre élément supérieur en regard du même autre élément inférieur.

Les maillons 65 et les organes de contact électrique 30 sont agencés de sorte que les organes de contact électrique 30 saillent latéralement des maillons 65 pour assurer le contact avec la première piste électrique 113 et la deuxième piste électrique 123.

Dans le dispositif joint tournant électrique 10 décrit ci-dessus, l'interconnexion électrique entre la première piste électrique 113 et la deuxième piste électrique 123 se fait grâce aux organes de contact électrique 30 roulant et déformables.

Le fait que les organes de contact électrique 30 sont déformables permet le montage précontraint, ou autrement dit sous déformation permanente, de ces organes de contact électrique 30, ce qui assure un contact mécanique permanent entre la première piste électrique 113, la deuxième piste électrique 123 et les organes de contact électrique 30.

En outre, le fait que les organes de contact électrique 30 sont roulant permet d'assurer le contact mécanique permanent et ce malgré la rotation des première et deuxième parties 11, 12 l'une par rapport à l'autre et donc des première et deuxième pistes électriques 113, 123.

En d'autres termes, la continuité électrique entre la première piste électrique 113 et la deuxième piste électrique 123 est également assurée au travers des organes de contact électrique 30, tout en évitant leur usure par frottement et donc en favorisant la longévité du mécanisme d'interconnexion électrique 50.

Il est à noter que c'est la combinaison de la précontrainte et du mouvement de rotation des première et deuxième pistes électriques 113, 123 l'une par rapport à l'autre qui génère la déformation des organes de contact électrique 30, formant ainsi une surface de contact plus importante entre les organes de contact électrique 30 et ces première et deuxième pistes électriques 113, 123.

Il est à noter également que les organes élastiques conducteurs 40 sont configurés pour s'adapter à la face interne respective des organes de contact électrique 30 malgré la déformation de ces derniers due à la précontrainte et au mouvement des première et deuxième pistes électriques 113, 123.

L'ajout de tels organes élastiques conducteurs 40 plaqués contre la face interne respective des organes de contact électrique 30 permet d'épaissir, en section, ces organes de contact électrique 30 sans réduire leur déformabilité.

En d'autres termes, ces organes élastiques conducteurs 40 permettent d'augmenter la section de passage de l'énergie électrique sans rendre plus rigide les organes de contact électrique 30.

Le dispositif joint tournant électrique 10 offre ainsi la possibilité de transférer de l'énergie électrique non seulement à haute tension mais aussi à haute intensité de courant.

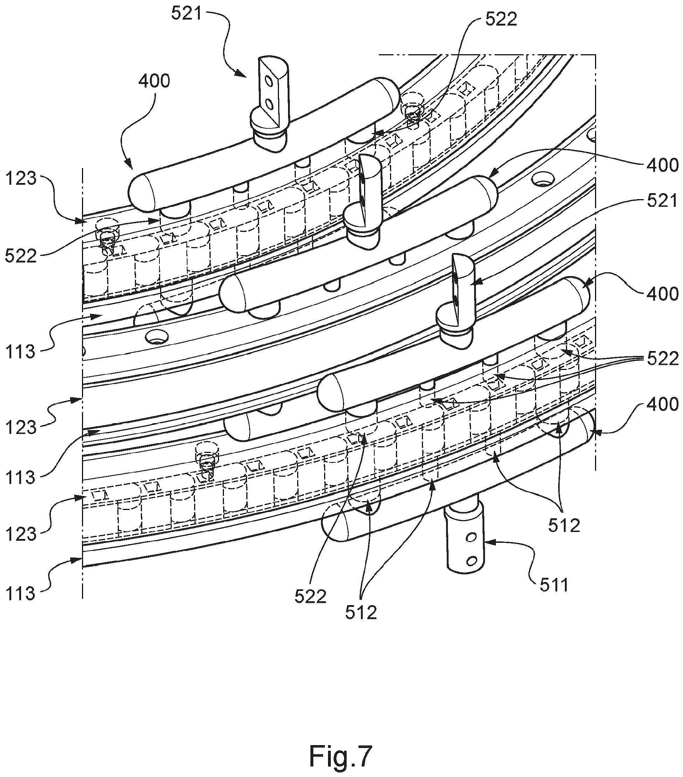

La figure 7 illustre une variante de réalisation qui diffère simplement du dispositif joint tournant électrique décrit ci-dessus en ce que les premiers connecteurs électriques et les deuxièmes connecteurs électriques présentent une forme de rateau incluant un corps principal 400 logé dans la chambre interne fermée et duquel saillent, d'un premier côté tourné vers la première piste électrique 113, respectivement vers la deuxième piste électrique 123, une pluralité de broches de connexion secondaires 512, 522 raccordées à la première piste électrique 113, respectivement à la deuxième piste électrique 123, et duquel saillent en outre, d'un second côté opposé au premier côté, une broche de connexion principale 511, 521.

Le corps principal 400 peut présenter une forme générale longitudinale et incurvée pour suivre globalement la forme ici circulaire du dispositif joint tournant électrique.

Des variantes non illustrées sont présentées ci-après.

Les organes de contact électrique peuvent être formés par des portions tronconiques plutôt que cylindriques.

Les organes élastiques conducteurs peuvent être formés par des lames ressorts plutôt que des ressorts en spirale.

Les organes élastiques conducteurs peuvent être formés par des pièces composites ou élastomères conductrices.

Les organes élastiques conducteurs peuvent être formés par un enchevêtrement, par exemple aléatoire, de fils conducteurs.

Le mécanisme d'interconnexion électrique peut être dépourvu d'organes élastiques conducteurs.

Les pistes électriques peuvent avoir une forme en U ou en 1 plutôt qu'en L, ou prendre d'autres formes.

La première partie pourrait être mobile en rotation par rapport à la deuxième partie qui serait fixe, ou les première et deuxième parties sont mobiles.

L'installation permet plutôt une exploitation d'énergie électrique, par exemple dans un environnement de champs éoliens ou est configurée pour équiper un concentrateur du type hub.

On rappelle plus généralement que l'invention ne se limite pas aux exemples décrits et représentés.

## Revendications

1. Dispositif joint tournant électrique configuré pour équiper une installation d'exploitation d'énergie (1), comportant une première partie (11) présentant au moins un premier connecteur électrique (111, 112) et au moins une première piste électrique (113) reliée électriquement au premier connecteur électrique, une deuxième partie (12) présentant au moins un deuxième connecteur électrique (121, 122) et au moins une deuxième piste électrique (123) reliée électriquement au deuxième connecteur électrique, et un mécanisme d'interconnexion électrique (50) configuré pour interconnecter électriquement la première piste électrique et la deuxième piste électrique, avec la première partie et la deuxième partie qui sont mobiles l'une par rapport à l'autre et qui définissent entre elles une chambre interne fermée (15) dans laquelle sont logés la première piste électrique, la deuxième piste électrique et le mécanisme d'interconnexion électrique ; **caractérisé en ce que** le mécanisme d'interconnexion électrique comporte une pluralité d'organes de contact électrique (30) qui sont logés, notamment précontraints, entre la première piste électrique et la deuxième piste électrique et qui sont configurés pour former des contacts roulant et déformables entre la première piste électrique et la deuxième piste électrique.

2. Dispositif selon la revendication 1, **caractérisé en ce que** les organes de contact électrique (30) présentent chacun une face interne et un logement interne délimité par la face interne et le mécanisme d'interconnexion électrique (50) comporte une pluralité d'organes élastiques conducteurs (40) qui sont disposés dans un logement interne respectif et plaqués contre une face interne respective.

3. Dispositif selon la revendication 2, **caractérisé en ce que** les organes élastiques conducteurs (40) sont formés par des ressorts en spirale.

4. Dispositif selon la revendication 3, **caractérisé en ce que** les organes élastiques conducteurs (40) présentent une face de contact venant s'appliquer sur la face interne respective des organes de contact électrique (30).

5. Dispositif selon l'une quelconque des revendications 1 à 4, **caractérisé en ce que** les organes de contact électrique (30) sont formés par des portions tubulaires cylindriques ou tronconiques.

6. Dispositif selon l'une quelconque des revendications 1 à 5, **caractérisé en ce que** les organes de contact électrique (30) sont disposés à distance les uns des autres entre et le long de la première piste électrique (113) et la deuxième piste électrique (123).

7. Dispositif selon l'une quelconque des revendications 1 à 6, **caractérisé en ce que** le mécanisme d'interconnexion électrique (50) comporte un organe support (60) sur lequel sont disposés, mobiles en rotation, les organes de contact électrique (30).

8. Dispositif selon la revendication 7, **caractérisé en ce que** l'organe support (60) présente la forme d'une chaîne pourvue de maillons (65) comportant chacun au moins un organe de contact électrique (30).

9. Dispositif selon la revendication 8, **caractérisé en ce que** l'organe support (60) comporte des éléments inférieurs (31) et des éléments supérieurs (32) disposés en regard et assujettis mécaniquement, chacun des éléments inférieurs chevauchant au moins un autre des éléments inférieurs et chacun des éléments supérieurs chevauchant au moins un autre des éléments supérieurs, formant ainsi les maillons (65).

10. Dispositif selon la revendication 9, **caractérisé en ce que** chaque maillon (65) présente, entre les éléments inférieurs (31) et les éléments supérieurs (32) qui se chevauchent, au moins un espace de réception d'un organe de contact électrique (30).

11. Dispositif selon la revendication 10, **caractérisé en ce que** chaque maillon (65) présente au moins un plot d'espacement(70) disposé entre deux espaces de réception successifs.

12. Dispositif selon l'une quelconque des revendications 7 à 11, **caractérisé en ce que** les maillons (65) et les organes de contact électrique (30) sont agencés de sorte que les organes de contact électrique (30) saillent latéralement des maillons pour assurer le contact avec la première piste électrique (113) et la deuxième piste électrique (123).

13. Dispositif selon l'une quelconque des revendications 1 à 12, **caractérisé en ce que** la première piste électrique (113) et la deuxième piste électrique (123) présentent, en section, une forme en L et sont disposées tête bêche de sorte à former un espace interne dans lequel sont disposés les organes de contact électrique (30).

14. Dispositif selon l'une quelconque des revendications 1 à 13, **caractérisé en ce que** l'au moins un premier connecteur électrique (111, 112), respectivement l'au moins un deuxième connecteur électrique (121, 122), présentent une forme de rateau incluant un corps principal (400) duquel saillent, d'un premier côté tourné vers la première piste électrique (113), respectivement vers la deuxième piste électrique (123), une pluralité de broches de connexion secondaires (512, 522) raccordées à la première piste électrique (113), respectivement à la deuxième piste électrique (123), et duquel saillent, d'un second côté opposé au premier côté, une broche de connexion principale (511, 521).

15. Installation d'exploitation d'énergie, notamment fluidique et/ou électrique, comportant au moins un dispositif joint tournant électrique (10) selon l'une quelconque des revendications 1 à 14, avec la première partie (11) du dispositif joint tournant qui est assujettie à une unité fixe (4) de l'installation (1) et la deuxième partie (12) du dispositif joint tournant qui est assujettie à une unité mobile (3) de l'installation.
